# EUROPÄISCHE PATENTANMELDUNG

(11) **EP 3 312 593 A1**
(43) Veröffentlichungstag der Anmeldung: **25.04.2018**
(21) Anmeldenummer: 16194722.1
(22) Anmeldetag: 20.10.2016
(51) Int. Cl.: G01N 21/64

(54) **VERFAHREN UND VORRICHTUNG ZUR OPTISCHEN ANREGUNG EINER MEHRZAHL VON ANALYTEN IN EINEM ARRAY VON REAKTIONSGEFÄSSEN UND ZUR ERFASSUNG VON FLUORESZENZLICHT AUS DEM ANALYTEN**

(71) Anmelder: Hain Lifescience GmbH, 72147 Nehren (DE)
(72) Erfinder: GUTEKUNST, Martin, 82386 Hugelfing (DE); POLLAND, Hans-Joachim, 82515 Wolfratshausen (DE)
(74) Vertreter: Keller, Günter

(57) **Zusammenfassung**

Die Erfindung betrifft ein Verfahren und eine Vorrichtung zur optischen Anregung einer Mehrzahl von Analyten (12) in einem Array von Reaktionsgefäßen (14) und zur Erfassung von Fluoreszenzlicht aus den Analyten (12), wobei den Analyten (12) Anregungslicht aus einer Anregungslichtquelle (38) zugeführt wird und wobei Fluoreszenzlicht aus den Analyten (12) gleichzeitig einem Fluoreszenzdetektor (34) zugeführt wird, wobei durch ein Array von Löchern (26) in einem oberhalb von dem Array von Reaktionsgefäßen (14) angeordneten Deckel (28) eine Mehrzahl von Strahlenbündeln (30) des Anregungslichts in die Reaktionsgefäße (14) unter dem Deckel (28) gelenkt wird und eine Mehrzahl von Strahlenbündeln (32) des Fluoreszenzlichts aus den Reaktionsgefäßen (14) zum Fluoreszenzdetektor (34) gelangt. Erfindungsgemäß wird vorgeschlagen, dass die Hauptstrahlen (76) der Mehrzahl von Strahlenbündeln (30) des Anregungslichts innerhalb und unterhalb der Löcher (26) bis in die Reaktionsgefäße (14) hinein divergieren und/oder dass die Hauptstrahlen (78) der Mehrzahl von Strahlenbündeln (32) des Fluoreszenzlichts innerhalb und oberhalb der Löcher (26) zum Fluoreszenzdetektor (34) hin konvergieren.

## Beschreibung

Die Erfindung betrifft ein Verfahren und eine Vorrichtung zur optischen Anregung einer Mehrzahl von Analyten in einem Array von Reaktionsgefäßen und zur Erfassung von Fluoreszenzlicht aus den Analyten gemäß dem Oberbegriff der Ansprüche 1 bzw. 2. Die Erfindung betrifft insbesondere die optische Anregung von biologischen Analyten oder Proben in Reaktionsgefäßen durch Bestrahlung mit Anregungslicht zur Erzeugung von Fluoreszenzlicht und zur anschließenden Messung der Intensität des erzeugten Fluoreszenzlichts.

Verfahren und Vorrichtungen zur Anregung von Analyten durch Bestrahlung mit Anregungslicht, zum Beispiel mit UV-Licht, sowie zur Erfassung und Messung der Intensität des durch die Anregung im Analyten erzeugten Fluoreszenzlichts werden vor allem bei der Untersuchung von biologischen Analyten eingesetzt, die Proteine, RNA oder DNA enthalten.

Ein besonders wichtiges Einsatzgebiet findet sich im Zusammenhang mit der Polymerase-Kettenreaktion (Polymerase Chain Reaction = PCR), die zur Vervielfältigung von DNA-Sequenzen verwendet wird. Bei der quantitativen oder Echtzeit-PCR wird ein flüssiger Analyt, der eine bestimmte DNA-Sequenz enthält, entweder mit einem Fluoreszenzfarbstoff, wie Sybr Green oder EvaGreen, oder mit einer markierten sequenzspezifischen DNA-Sonde (Hybeacon, Hydrolysesonde oder Light-ON/OFF-Sonde) versetzt und dann zyklisch erwärmt und abgekühlt, um die Menge der enthaltenen DNA-Sequenz zu vervielfältigen. Die verwendeten Fluoreszenzfarbstoffe oder DNA-Sonden binden sich nur an das Reaktionsprodukt der PCR und emittieren im gebundenen Zustand Fluoreszenzlicht, wenn sie mit geeignetem Anregungslicht angeregt werden. Eine Zunahme der Menge des Reaktionsprodukts bewirkt daher eine Zunahme der Intensität des im Analyten erzeugten Fluoreszenzlichts, die bei jedem Vervielfältigungszyklus in Echtzeit durch eine optische Fluoreszenzmessung mittels eines geeigneten Detektors bestimmt werden kann. Dies ermöglicht es, die jeweilige DNA-Konzentration im Analyten durch Vergleich mit einem Standard-Analyten quantitativ zu bestimmen. Die erhaltenen Messdaten können in einem logarithmischen Diagramm über der Anzahl von Zyklen aufgetragen werden, um mittels einer geeigneten Computer-Software die relative oder absolute Menge der vervielfältigten DNA zu bestimmen.

Ähnliche Verfahren und Vorrichtungen zur Fluoreszenzmessung können z.B. auch bei der Schmelzkurvenanalyse (Melting Curve Analysis = MCA) angewandt werden, bei der die Zersetzungseigenschaften einer DNA beim Erwärmen über der Temperatur gemessen wird.

Vorrichtungen zur Durchführung der quantitativen oder Echtzeit-PCR mittels optischer Fluoreszenzmessungen an DNA in Analyten werden häufig auch als "Real-Time Cycler" bezeichnet.

Diese Real-Time Cycler umfassen Einrichtungen zum abwechselnden Erwärmen und Abkühlen von Analyten in einem Array von Reaktionsgefäßen während der Zyklen der quantitativen oder Echtzeit-PCR bzw. zum Erhitzen der Analyten während der Schmelzkurvenanalyse, eine Anregungslichtquelle zum Anregen des Fluoreszenzfarbstoffs im Analyten, sowie einen optischen Fluoreszenzdetektor zur Erfassung und Messung der Intensität des infolge der Anregung emittierten Fluoreszenzlichts.

Die Reaktionsgefäße sind gewöhnlich Teil einer Mikrotiterplatte, die austauschbar in den Real-Time Cycler eingesetzt werden kann und in der die Reaktionsgefäße in einer bestimmten Anordnung (Array) angeordnet sind. In den dabei üblicherweise verwendeten 96er-Mikrotiterplatten ist das Array von Reaktionsgefäßen ein 8 x 12-Array, in dessen Reaktionsgefäße die Analyten eingebracht werden, bevor eine transparente dichte Abdeckung auf die Oberseite der Mikrotiterplatte aufgeschweißt oder aufgeklebt wird, um die Reaktionsgefäße zu verschließen und eine Kontamination zu verhindern. Die Reaktionsgefäße werden auch als Näpfchen oder Reaktionskavitäten bezeichnet.

Um eine Kondensation von verdampftem Analyt an der Abdeckung zu verhindern, weisen Real-Time Cycler gewöhnlich einen beheizbaren Deckel auf, der bei den meisten im Gebrauch befindlichen Real-Time Cyclern mit Löchern versehen ist. Durch die Löcher wird zum einen das Anregungslicht von oben her in die Reaktionsgefäße unter dem Deckel gelenkt und zum anderen das in den Analyten erzeugte Fluoreszenzlicht mittels des Fluoreszenzdetektors von oben her erfasst. Die Anordnung der Löcher im Deckel entspricht der Anordnung von Reaktionsgefäßen unterhalb des Deckels, so dass jedem Reaktionsgefäß ein Loch zugeordnet ist. Da die Tiefe der Reaktionsgefäße viel größer ist als der Durchmesser einer Öffnung am oberen Ende der Reaktionsgefäße, besitzen die meisten der heute im Einsatz befindlichen optischen Real-Time Cycler eine telezentrische Optik mit einer Feldlinse, die einerseits zwischen der Anregungslichtquelle und dem Deckel sowie andererseits auch zwischen dem Deckel und dem Fluoreszenzdetektor angeordnet ist. Die Feldlinse dient dazu, das Anregungslicht aus der Anregungslichtquelle vor dem Hindurchtritt durch die Löcher im Deckel parallel auszurichten, so dass die optischen Achsen der durch die Löcher im Deckel hindurchtretenden Strahlenbündel mit den Längsmittelachsen der Reaktionsgefäße fluchten. Weiter dient die Feldlinse aber auch dazu, die von den Analyten in den Reaktionsgefäßen emittierten und in paralleler Ausrichtung durch die Löcher im Deckel hindurch nach oben austretenden Strahlenbündel des Fluoreszenzlichts zu bündeln oder zu fokussieren, so dass sie in Richtung des Detektors konvergieren.

Beispiele für heute im Einsatz befindliche optische Real-Time Cycler mit telezentrischer Optik sind in der EP 1 681 555 B1, der EP 1 681 556 B1 oder der US 7,687,260 B2 offenbart. Weiter offenbart die EP 1 619 491 B1 einen optischen Real-Time Cycler, bei dem die Feldlinse als Fresnel-Linse ausgebildet ist. Außerdem sind auch Real-Time Cycler bekannt, die statt einer einzigen großen Feldlinse ein Array von kleinen, jeweils oberhalb von den Reaktionsgefäßen angeordneten Feldlinsen aufweisen.

Dort, wo nur eine Feldlinse verwendet wird, muss diese einen relativ großen Durchmesser besitzen, damit das Fluoreszenzlicht aus allen Löchern des Deckels von der Feldlinse gebündelt und zum Detektor gelenkt werden kann. Außerdem muss die Feldlinse optisch sehr hochwertig sein, um optische Störungen und damit die Verluste an Fluoreszenzlicht zu minimieren. Dies hat zur Folge, dass die Entwicklung und Herstellung derartiger Feldlinsen aufwändig und teuer ist, was sich auch in den Herstellungskosten des Real-Time Cyclers niederschlägt. Auch durch eine Vielzahl von kleinen Feldlinsen können diese Probleme nicht vermieden werden.

Ausgehend hiervon liegt der Erfindung die Aufgabe zugrunde, ein Verfahren und eine Vorrichtung der eingangs genannten Art dahingehend zu verbessern, dass auf eine oder mehrere Feldlinsen bzw. eine telezentrische Optik verzichtet werden kann.

Zur Lösung dieser Aufgabe schlägt das erfindungsgemäße Verfahren vor, die Mehrzahl von Strahlenbündeln des Anregungslichts mit divergierenden Hauptstrahlen von oben durch die Löcher des Deckels hindurch bis in die Reaktionsgefäße hinein zu lenken und/oder die Mehrzahl von Strahlenbündeln des Fluoreszenzlichts mit konvergierenden Hauptstrahlen von unten durch die Löcher des Deckels hindurch und dann zum Fluoreszenzdetektor zu lenken. Die erfindungsgemäße Vorrichtung ist dadurch gekennzeichnet, dass die Hauptstrahlen der Mehrzahl von Strahlenbündeln des Anregungslichts innerhalb und unterhalb der Löcher bis in die Reaktionsgefäße hinein divergieren und/oder dass die Hauptstrahlen der Mehrzahl von Strahlenbündeln des Fluoreszenzlichts innerhalb und oberhalb der Löcher zum Fluoreszenzdetektor hin konvergieren.

Die erfindungsgemäße Lösung verzichtet somit einerseits darauf, die Mehrzahl von Strahlenbündeln des Anregungslichts vor ihrem Hindurchtritt durch die Löcher des Deckels mittels einer Feldlinse parallel auszurichten, sondern lenkt das Anregungslicht aus der Anregungslichtquelle direkt durch die Löcher des Deckels hindurch. Bei Verwendung einer punktförmigen oder allgemein punktförmigen Anregungslichtquelle bedeutet dies, dass die in die Reaktionsgefäße eintretenden Strahlenbündel auch innerhalb und unterhalb des Deckels divergieren müssen.

Die erfindungsgemäße Lösung verzichtet andererseits darauf, die Strahlenbündel des Fluoreszenzlichts nach dem Hindurchtritt durch die Löcher des Deckels mittels einer Feldlinse auf den Fluoreszenzdetektor zu fokussieren, von dem dann die Intensität des Fluoreszenzlichts aus sämtlichen Reaktionsgefäßen gleichzeitig gemessen wird. Infolge der Ausrichtung der Löcher bedeutet dies, dass die aus den Löchern austretenden Strahlenbündel zum Fluoreszenzdetektor hin konvergieren.

Durch die obigen Maßnahmen kann auf die Entwicklung einer qualitativ hochwertigen und störungsfreien Feldlinse verzichtet und die damit verbundenen beträchtlichen Kosten eingespart werden. Außerdem kann die Lichtausbeute verbessert werden, weil es ohne eine Feldlinse nicht zu einer Rückreflektion von Fluoreszenzlicht nach unten zum Deckel hinkommen kann. Darüber hinaus werden auch störende Reflexe des Anregungslichts an den Oberflächen der Feldlinse oder Feldlinsen vermieden.

Zur gleichzeitigen Erfassung des Fluoreszenzlichts und zur Messung seiner Intensität umfasst der Fluoreszenzdetektor vorteilhaft eine Kamera mit Halbleiter-Sensoren (z.B. CCD oder CMOS), welche die nach oben durch die Löcher des Deckels hindurchtretenden konvergierenden Strahlenbündel des Fluoreszenzlichts aus den verschiedenen Reaktionsgefäßen auf verschiedenen, den einzelnen Reaktionsgefäßen zugeordneten Teilbereichen eines CCD- oder CMOS-Arrays der Kamera erfasst und die Intensität des erfassten Fluoreszenzlichts auswertet.

Bei der Anregungslichtquelle handelt es sich vorzugsweise um eine punktförmige oder allgemein punktförmige Lichtquelle. Am besten wird eine Leuchtdiode (LED) verwendet, die Anregungslicht mit einem definierten Wellenlängenspektrum emittiert. Zwischen der Anregungslichtquelle und dem Deckel befindet sich zweckmäßig ein Anregungsoptiksystem, das vorteilhaft eine homogene Lichtquelle, ein Excitationsobjektiv und ein Excitationsfilter umfasst. Die homogene Lichtquelle hat die Aufgabe, an seiner von der Anregungslichtquelle abgewandten und dem Excitationsobjektiv zugewandten Stirnfläche einen Lichtfleck mit einer homogenen Lichtverteilung zu erzeugen. Diese Vorrichtung hat die Aufgabe für eine homogene Lichtverteilung zu sorgen. Der Excitationsfilter dient zum Herausfiltern von unerwünschten Wellenlängen aus dem Anregungslicht. Um es zu ermöglichen, aus Platzgründen die optische Achse des Lichtmischers, des Excitationsobjektivs und des Excitationsfilters horizontal auszurichten, kann zudem zwischen dem Excitationsobjektiv und dem Deckel ein Einkoppelspiegel vorgesehen sein, der das Anregungslicht nach unten zum Deckel reflektiert.

Zwischen dem Deckel und dem Fluoreszenzdetektor ist ein Detektionsoptiksystem angeordnet, bei dem es sich um ein Standard-Optiksystem ohne Feldlinsen handelt. Das Detektionsoptiksystem umfasst vorteilhaft einen Detektionsfilter und ein Detektionsobjektiv, das zweckmäßig ein kommerzielles Objektiv ohne telezentrische Eigenschaften ist. Der Detektionsfilter dient zum Herausfiltern von unerwünschten Wellenlängen aus dem Fluoreszenzlicht. Neben dem Detektionsfilter und dem Detektionsobjektiv sind vorteilhaft keine weiteren Linsen, Prismen oder andere optische Komponenten im Strahlengang des Fluoreszenzlichts zwischen dem Deckel und dem Detektor angeordnet.

Um einerseits so viel Anregungslicht wie möglich durch die Löcher des Deckels in die Reaktionsgefäße zu lenken und andererseits die Ausbeute des vom Detektor erfassten Fluoreszenzlichts weiter zu steigern, sind die Löcher nicht wie bei den bekannten telezentrischen Optiken bei Real-Time Cyclern senkrecht zu einer Ebene des Deckels ausgerichtet, sondern weisen zwischen einer Oberseite und einer Unterseite des Deckels divergierende Längsmittelachsen auf. Diese Längsmittelachsen schneiden sich gemäß einer weiteren bevorzugte Ausgestaltung der Erfindung oberhalb des Deckels in einem gemeinsamen Schnittpunkt, der vorzugsweise innerhalb des Detektionsobjektivs liegt, so dass die Löcher das Fluoreszenzlicht direkt zum Detektionsobjektiv und damit zum Fluoreszenzdetektor lenken. Dies bedeutet zugleich, dass der Neigungswinkel der Löcher bzw. der Neigungswinkel von deren Längsmittelachsen in Bezug zur Mittelsenkrechten oder zum Lot der Deckelebene von der Deckelmitte weg nach außen zunimmt.

Die Längsmittelachse jedes Lochs im Deckel kann dabei entweder so ausgerichtet werden, dass sie mit dem Hauptstrahl des durch das jeweilige Loch hindurchtretenden Strahlenbündels des Anregungslichts oder des durch das jeweilige Loch hindurchtretenden Strahlenbündels des Fluoreszenzlichts fluchtet.

Darüber hinaus kann die Längsmittelachse jedes Lochs im Deckel aber auch so ausgerichtet werden, dass sie mit der Winkelhalbierenden der Hauptstrahlen der durch das jeweilige Loch hindurchtretenden Strahlenbündel des Anregungs- und Fluoreszenzlichts fluchtet.

Eine weitere bevorzugte Ausgestaltung der Erfindung sieht vor, dass eine gemeinsame optische Achse sämtlicher Strahlenbündel des Anregungslichts, entsprechend der optischen Achse des zwischen der Anregungslichtquelle und dem Deckel angeordneten Anregungsoptiksystems, so ausgerichtet wird, dass sie mit einer Ebene des Deckels und/oder des Arrays von Reaktionsgefäßen einen Winkel ungleich 90 Grad einschließt.

Demgegenüber wird eine gemeinsame optische Achse sämtlicher Strahlenbündel des Fluoreszenzlichts, entsprechend der optische Achse des zwischen dem Deckel und dem Fluoreszenzdetektor angeordnetes Detektionsoptiksystems, gemäß einer weiteren vorteilhaften Ausgestaltung der Erfindung so ausgerichtet, dass sie mit einer Ebene des Deckels und/oder des Arrays von Reaktionsgefäßen einen Winkel gleich 90 Grad und mit der gemeinsamen optischen Achse sämtlicher Strahlenbündel des Anregungslichts bzw. der optischen Achse des Anregungsoptiksystems einen kleinen Winkel α einschließt. Durch diese Maßnahme werden der Strahlengang des Anregungslichts und der Strahlengang des Fluoreszenzlichts getrennt.

Dies hat zum einen den Vorteil, dass eventuelles, an der Abdeckung der Reaktionsgefäße oder am Flüssigkeitsspiegel der Analyten reflektiertes Anregungslicht unter einem dem Einfallswinkel entsprechenden Winkel zur entgegengesetzten Seite hin weg reflektiert wird und daher nicht zum Detektor gelangen kann. Dadurch wird die Qualität der Messergebnisse verbessert. Zum anderen besteht ein weiterer Vorteil einer solchen Off-Axis-Beleuchtung darin, dass ein Strahlteiler, wie er z.B. in der vorgenannten US 7,687,260 B2 dargestellt und beschrieben ist, entbehrlich ist. Dadurch wird die Effizienz der Erfassung des Fluoreszenzlichts um den Faktor 4 verbessert, da weder 50 % des Anregungslichts noch 50 % des Fluoreszenzlichts im Strahlteiler verloren geht. Außerdem kann eine Anregungslichtquelle mit einer geringeren Lichtintensität eingesetzt werden. Die genannten Vorteile werden besonders dann erreicht, wenn gemäß einer weiteren bevorzugten Ausgestaltung der Erfindung der oben genannte kleine Winkel α zwischen den optischen Achsen des Anregungsoptiksystems und des Detektionsoptiksystems einerseits größer als die Summe der objektseitigen Aperturen des Anregungsoptiksystems und des Detektionsoptiksystems ist, andererseits jedoch weniger als 10 Grad, bevorzugt weniger als 5 Grad und am besten knapp 3 Grad beträgt, um in den Reaktionsgefäßen Abschattungsverluste zu minimieren.

Grundsätzlich ist es jedoch auch möglich, zur Trennung des Anregungslichts von dem zu erfassenden Fluoreszenzlicht einen Strahlteiler oder einen polarisierenden Strahlteiler zu verwenden.

Um einerseits die Verwendung von herkömmlichen Mikrotiterplatten zu ermöglichen, bei denen die benachbarten Reaktionsgefäße in dem Array von Reaktionsgefäßen gleiche Abstände voneinander aufweisen und andererseits die Abschattungsverluste weiter minimieren zu können, weisen die Längsmittelachsen benachbarter Löcher gemäß einer anderen vorteilhaften Ausgestaltung der Erfindung geringfügig kleinere Abstände als die Längsmittelachsen benachbarter Reaktionsgefäße auf, um der Divergenz der Löcher Rechnung zu tragen. Diese Maßnahme hat zur Folge, dass die Löcher nicht genau über den Reaktionsgefäßen angeordnet sondern in Richtung der Deckelmitte versetzt sind, wobei der Versatz mit zunehmendem Abstand von der Deckelmitte zunimmt.

Bei Verwendung herkömmlicher Mikrotiterplatten, bei denen die Reaktionsgefäße parallele Längsmittelachsen aufweisen, lassen sich die Abschattungsverluste auch dadurch minimieren, dass sich die Längsmittelachsen der Reaktionsgefäße gemäß einer weiteren bevorzugten Ausgestaltung der Erfindung jeweils innerhalb der Reaktionsgefäße mit der Längsmittelachse der zugehörigen Löcher schneiden.

Bei Versuchen wurde festgestellt, dass durch die obigen Maßnahmen bei einer um wenige Grad gekippten Off-Axis-Beleuchtung innerhalb der Reaktionsgefäße keine merkliche Abschattung des Anregungslichts zu verzeichnen war.

Zweckmäßigerweise sind die Löcher im Deckel Bohrungen, d.h. Löcher mit einem kreisförmigen Querschnitt, da sich derartige Löcher mit einem 5- oder 6-Achs-Bearbeitungszentrum ohne weiteres mit der gewünschten Ausrichtung in den Deckel einbringen lassen.

Der Deckel ist vorteilhafterweise beheizbar, um eine Kondensation der Analyten an transparenten Abdeckungen der Reaktionsgefäße zu vermeiden.

Da bei Mikrotiterplatten die Reaktionsgefäße in dem Array von Reaktionsgefäßen in geraden Zeilen und Spalten angeordnet sind, ist es von Vorteil, wenn die optische Achse des Detektionsoptiksystems mit der Schnittgeraden zweier zueinander senkrechter Symmetrieebenen der Mikrotiterplatte zusammenfällt, zu denen die Reaktionsgefäße in den Zeilen bzw. in den Spalten spiegelsymmetrisch sind. Dadurch können die Löcher im Deckel in Bezug zu der zur Ebene des Deckels senkrechten optischen Achse des Detektionsoptiksystems rotationssymmetrisch angeordnet werden, was die Programmierung des Bohrvorgangs im Bearbeitungszentrum erleichtert.

Im Folgenden wird die Erfindung anhand eines in der Zeichnung dargestellten Ausführungsbeispiels näher erläutert.
Fig. 1 zeigt eine schematische Schnittansicht einer erfindungsgemäßen Vorrichtung als Teil eines Real-Time Cyclers;
Fig. 2 zeigt eine vergrößerte Ansicht des Details II in Fig.1;
Fig. 3 zeigt eine Draufsicht auf eine zusammen mit dem Real-Time Cycler verwendbare Mikrotiterplatte und den Schnittpunkt der optischen Achse einer Detektionsoptik des Real-Time Cyclers mit der Mikrotiterplatte;
Fig. 4 zeigt eine überlagerte Darstellung der Näpfchen der Mikrotiterplatte und der Löcher im beheizbaren Deckel des Real-Time Cyclers bei Betrachtung von oben.

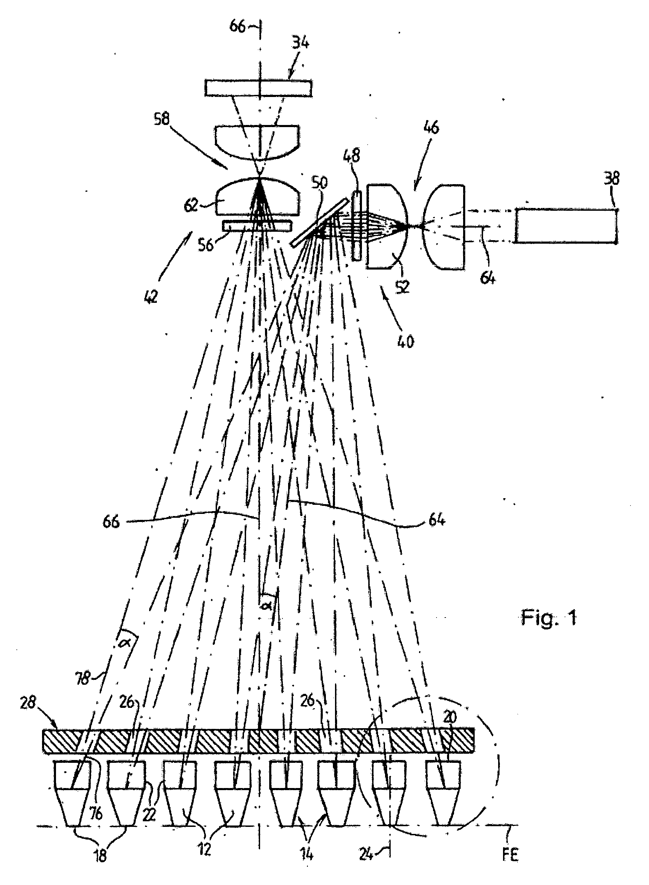

Der in Fig. 1 nur teilweise und schematisch dargestellte Real-Time Cycler 10 dient zur Durchführung von quantitativer oder Echtzeit-PCR in flüssigen Analyten 12 in Reaktionsgefäßen oder Näpfchen 14 einer Mikrotiterplatte 16, wobei für jedes Näpfchen 14 die Menge einer zusammen mit einem Fluoreszenzfarbstoff im flüssigen Analyten 12 enthaltenen DNA-Sequenz zyklisch vervielfältigt und gemessen wird. Zu diesem Zweck werden die Analyten 12 in den Näpfchen 14 gemeinsam einer thermischen Wechselbehandlung unterzogen, um sie dadurch abwechselnd zu erwärmen und abzukühlen. Bei jedem Erwärmungszyklus wird die Menge der DNA-Sequenz in den Analyten 12 durch die Polymerase-Kettenreaktion vervielfältigt. Der an das Reaktionsprodukt gebundene Fluoreszenzfarbstoff emittiert Fluoreszenzlicht, wenn er mit Anregungslicht angeregt wird. Da die Intensität des emittierten Fluoreszenzlichts von der Menge des Reaktionsprodukts abhängt, kann die letztere durch eine optische Fluoreszenzmessung mittels des Real-Time Cyclers 10 und durch Vergleich mit einem Standard-Analyten quantitativ bestimmt werden.

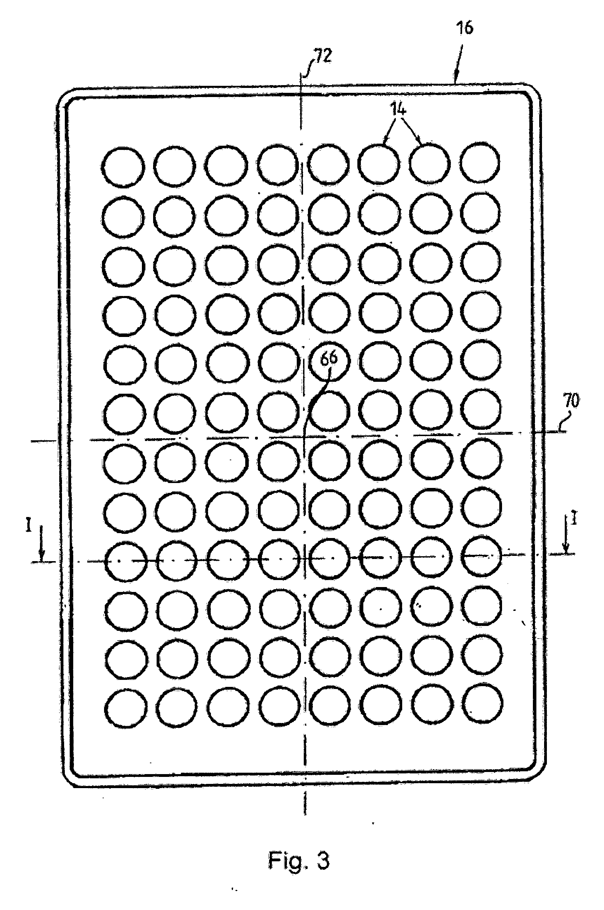

Bei der Mikrotiterplatte 16 kann es sich beispielsweise um die in Fig. 3 dargestellte Mikrotiterplatte handeln, die ein 96er-Array von 8 x 12 Näpfchen 14 aufweist. Alternativ kann der Real-Time Cycler 10 jedoch auch zur Verwendung mit anderen Mikrotiterplatten angepasst werden, zum Beispiel mit Mikrotiterplatten, die ein 384er-Array von 16 x 24 Näpfchen aufweisen, oder mit Mikrotiterplatten, die ein 48er-Array von 6 x 8 Näpfchen aufweisen. Die Näpfchen 14 besitzen jeweils einen Boden 18, ein durch eine transparente Abdeckung 20 verschlossenes oberes Ende und Seitenwände 22, die zu einer Längsmittelachse 24 konzentrisch sind.

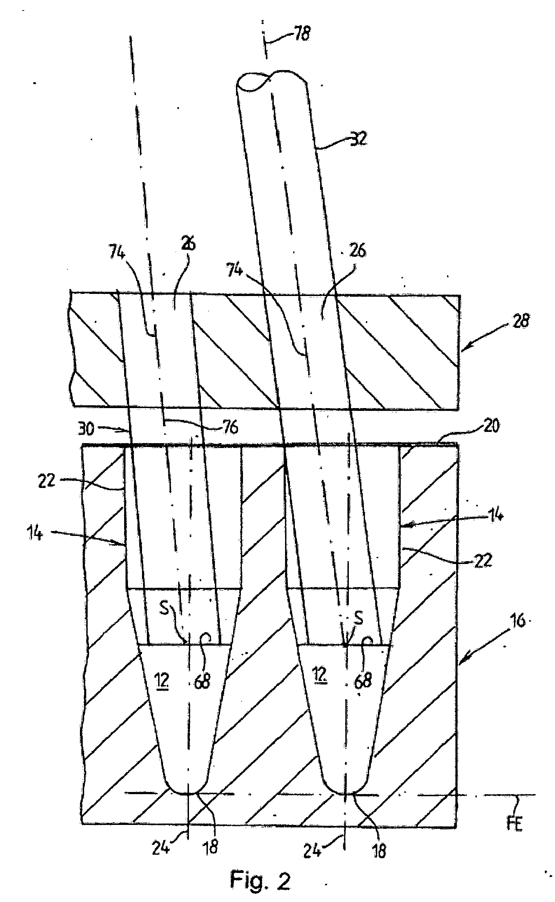

Wie in Fig. 1 schematisch dargestellt, wird die Mikrotiterplatte 16 mit den Näpfchen 14 so im Real-Time Cycler 10 positioniert, dass sie unterhalb von einem mit Löchern 26 versehenen ebenen Deckel 28 angeordnet ist. Die Löcher 26 im Deckel 28 dienen dazu, in jedes der Näpfchen 14 der Mikrotiterplatte 16 ein Strahlenbündel 30 (Fig. 2) des Anregungslichts zu lenken, das von oben her auf den Deckel 28 einfällt, und das restliche Anregungslicht abzuschirmen. Die Löcher 26 dienen außerdem dazu, aus jedem der Näpfchen 14 der Mikrotiterplatte 16 ein Strahlenbündel 32 (Fig. 2) des infolge der Anregung im Analyten 12 erzeugten Fluoreszenzlichts nach oben zu einem Fluoreszenzdetektor 34 passieren zu lassen. Bei den Löchern 26 im Deckel 28 handelt es sich um Bohrungen, die jeweils etwa oberhalb von den Näpfchen 14 der Mikrotiterplatte 16 angeordnet sind, wobei ihre Anzahl der Anzahl der Näpfchen 14 der Mikrotiterplatten 16 entspricht, die in den Real-Time Cycler 10 eingesetzt werden sollen.

Zur Vermeidung einer Verunreinigung und/oder Verdunstung der Analyten 12 sind die Näpfchen 14 am oberen Ende durch eine aufgeschweißte oder aufgeklebte transparente Abdeckung (nicht dargestellt) verschlossen. Der Deckel 28 enthält zum Beispiel integrierte Widerstands-Heizelemente (nicht dargestellt), die es gestatten, den Deckel 28 zu erwärmen, um eine Kondensation der Analyten 12 an der Abdeckung zu vermeiden.

Oberhalb von der Mikrotiterplatte 16 und dem Deckel 28 enthält der Real-Time Cycler 10 eine optische Vorrichtung 36 zur Anregung des Fluoreszenzfarbstoffs in den Analyten 12 mit dem Anregungslicht und zur gleichzeitigen Erfassung bzw. Messung der Intensität des infolge der Anregung von den Analyten 12 emittierten Fluoreszenzlichts. Die Vorrichtung 36 umfasst eine das Anregungslicht emittierende Anregungslichtquelle 38, ein zwischen der Anregungslichtquelle 38 und dem Deckel 28 angeordnetes Anregungsoptiksystem 40, den Fluoreszenzdetektor 34 zur gleichzeitigen Messung der Intensität des von sämtlichen Analyten 12 emittierten Fluoreszenzlichts, sowie ein zwischen dem Deckel 28 und dem Detektor 34 angeordnetes Detektionsoptiksystem 42.

Bei der Anregungslichtquelle 38 handelt es sich um eine Leuchtdiode (LED), während es sich bei dem Fluoreszenzdetektor 34 um eine für Fluoreszenzlicht empfindliche CCD- oder CMOS-Kamera handelt. Die Kamera umfasst ein Array von lichtempfindlichen CCDs oder CMOSs, von denen jede die Intensität des abgegebenen Fluoreszenzlichts aus einem der Näpfchen 14 der Mikrotiterplatte 16 erfasst.

Das vereinfacht dargestellte Anregungsoptiksystem 40 umfasst eine homogene Lichtquelle 38, ein Excitationsobjektiv 46, einen Excitationsfilter 48 und einen Einkoppelspiegel 50, die in Strahlrichtung des Anregungslichts in dieser Reihenfolge zwischen der Anregungslichtquelle 38 und dem Deckel 28 angeordnet sind. Das Excitationsobjektiv 46 hat die Aufgabe, das Anregungslicht von der homogenen Lichtquelle 38 in einer von den Böden 18 der Näpfchen 14 der Mikrotiterplatte 16 aufgespannten Fokusebene FE zu fokussieren, wobei es eine große Schärfentiefe besitzt. Der Excitationsfilter 48 filtert unerwünschte Wellenlängen aus dem Anregungslicht heraus, während der Einkoppelspiegel 50 das Anregungslicht nach unten zum Deckel 28 hin reflektiert.

Das ebenfalls vereinfacht dargestellte Detektionsoptiksystem 42 umfasst einen Detektionsfilter 56 und ein Detektionsobjektiv 58, die in Strahlrichtung des von den Analyten 14 zum Detektor 34 hin emittierten Fluoreszenzlichts in dieser Reihenfolge zwischen dem Deckel 28 und dem Detektor 34 angeordnet sind.

Der Fokus des Detektionsobjektivs 58 liegt an der Oberseite des Deckels 28, um ein möglichst geringes optisches Übersprechen des Fluoreszenzlichts aus benachbarten Näpfchen 14 der Mikrotiterplatte 16 zu erhalten. Der Detektionsfilter 56 dient zum Herausfiltern von unerwünschten Wellenlängen aus dem Fluoreszenzlicht.

Das Anregungsoptiksystem 40 weist eine optische Achse 64 auf, die zwischen der Anregungslichtquelle 38 und dem Einkoppelspiegel 50 horizontal ausgerichtet ist und vom Einkoppelspiegel 50 aus unter einem Neigungswinkel zwischen 87 und 88 Grad nach unten zum Deckel 28 verläuft. Das Detektionsoptiksystem 42 weist eine optische Achse 66 auf, die zu einer vom Deckel 28 bzw. von der Mikrotiterplatte 16 aufgespannten Ebene und zu der Fokusebene FE senkrecht ist. Dadurch ist die optische Achse 64 des Anregungsoptiksystems 40 unterhalb vom Einkoppelspiegel 50 in Bezug zur optischen Achse 66 des Detektionsoptiksystems 42 unter einem kleinen Winkel α zwischen 2 und 3 Grad geneigt. Um zu verhindern, dass am Flüssigkeitsspiegel 68 der Analyten 12 in den Näpfchen 14 der Mikrotiterplatte 16 Anregungslicht direkt zum Detektor 34 reflektiert werden kann, ist dieser in Fig. 1 zur besseren Erläuterung stark vergrößert dargestellte Winkel α größer als die Summe der objektseitigen Aperturen des Anregungsoptiksystems 40 und des Detektionsoptiksystems 42.

Wie aus Fig. 1 und 3 ersichtlich ist, wird die Mikrotiterplatte 16 beim Einsetzen in den Real-Time Cycler 10 in Bezug zur optischen Achse 66 des Detektionsoptiksystems 42 zentriert, so dass die optische Achse 66 mit einer Schnittgeraden von zwei zur Ebene des Deckels 28 senkrechten Symmetrieebenen 70, 72 der Mikrotiterplatte 16 fluchtet, die zu den Zeilen bzw. Spalten von Näpfchen 14 der Mikrotiterplatte 16 parallel sind. Diese Schnittgerade fällt mit einer Mittelsenkrechten des Deckels 28 zusammen. Fig. 3 zeigt darüber hinaus die Schnittebene I-I der Fig. 1

Damit der Real-Time Cycler 10 ohne eine telezentrische Optik bzw. ohne eine oberhalb vom Deckel 28 angeordnete Feldlinse auskommen kann, ist bei dem Real-Time Cycler 10 jede Bohrung 26 im Deckel 28 so ausgerichtet, dass ihre Längsmittelachse 74 mit der Winkelhalbierenden des Winkels α zwischen einem Hauptstrahl 76 des nach unten zu durch die Bohrung 26 hindurchtretenden Strahlenbündels 30 des Anregungslichts und einem Hauptstrahl 78 des nach oben zu durch die Bohrung 26 hindurchtretenden Strahlenbündels 32 des Fluoreszenzlichts fluchtet, wie in Fig. 1 links und Fig. 2 dargestellt. In diesem Fall sind die Längsachsen 74 sämtlicher Bohrungen 26 im Deckel 28 so ausgerichtet, dass sie sich im Bereich zwischen dem Anregungsoptiksystem 40 und dem Detektionsoptiksystem 42 schneiden, wobei der Schnittpunkt auf der Winkelhalbierenden des von den optischen Achsen 64 bzw. 66 des Anregungsoptiksystems 40 und des Detektoroptiksystems 42 eingeschlossenen Winkels α liegt.

Da die optische Achse 66 des Detektionsoptiksystems 42 und die optische Achse 64 des Anregungsoptiksystems 40 in Richtung des Deckels 28 unter einem Winkel α von nur wenigen Grad konvergieren, können die Bohrungen 26 im Deckel 28 alternativ auch so ausgerichtet werden, dass ihre Längsmittelachsen 74 entweder mit den Hauptstrahlen 76 der nach unten zu durch die Bohrungen 26 hindurchtretenden Strahlenbündel 30 des Anregungslichts fluchten, wie in Fig. 2 links dargestellt, oder mit den Hauptstrahlen 78 der nach oben zu durch die Bohrungen 26 hindurchtretenden Strahlenbündel 32 des Fluoreszenzlichts, wie in Fig. 2 rechts dargestellt.

Im zuerst genannten Fall sind die Bohrungen 26 so ausgerichtet, dass sich alle Längsmittelachsen 74 innerhalb des Excitationsobjektivs 46 schneiden, wobei der Schnittpunkt in der Hauptebene des zum Anregungsfilter 48 des Excitationsobjektivs 46 liegt. Im zuletzt genannten Fall sind die Längsmittelachsen 74 der Bohrungen 26 so ausgerichtet, dass sie sich innerhalb des Detektionsobjektivs 58 schneiden, wobei der Schnittpunkt in der Hauptebene des zum Detektionsfilter 56 benachbarten Detektionsobjektivs 58 liegt.

Durch eine solche Ausrichtung der Bohrungen 26 wird erreicht, dass zum einen die nach unten zu durch die Bohrungen 26 hindurch und in die Näpfchen 14 der Mikrotiterplatte 16 eintretenden Strahlenbündel 30 des Anregungslichts auch innerhalb der Bohrungen 16 und unterhalb des Deckels 28 sowie innerhalb der Näpfchen 14 divergierende Hauptstrahlen 76 besitzen, wie aus Fig. 1 und 2 ersichtlich ist, und dass zum anderen die durch die Bohrungen 26 hindurchtretenden Strahlenbündel 32 des Fluoreszenzlichts innerhalb der Bohrungen 26 und oberhalb des Deckels 28 Hauptstrahlen 78 besitzen, die nach oben zum Detektor 34 bzw. zum Detektionsoptiksystem 42 hin konvergieren.

Dies bedeutet, dass in der Nähe der Deckelmitte die Bohrungen 26 in Bezug zu einer Mittelsenkrechten des Deckels 28 oder einem Lot zur Ebene des Deckels 28 unter einem kleineren Neigungswinkel geneigt sind als in der Nähe des Deckelrandes, wie aus Fig. 1 ersichtlich ist. Der Neigungswinkel der Längsmittelachsen 74 der Bohrungen 26 in Bezug zur Mittelsenkrechten des Deckels oder zum Lot der Deckelebene bzw. der dazu parallelen Fokusebene FE nimmt dabei von der Deckelmitte weg nach außen zu, so dass die am weitesten von der Deckelmitte entfernten Bohrungen 26 oberhalb von den Näpfchen 14 in den vier Ecken der Mikrotiterplatte 16 den größten Neigungswinkel in Bezug zur Mittelsenkrechten des Deckels 28 bzw. zum Lot der Ebene des Deckels 28 besitzen, wie ebenfalls aus Fig. 1 ersichtlich ist.

Wie am besten in Fig. 2 dargestellt, weisen demgegenüber sämtliche Näpfchen 14 der Mikrotiterplatte 16 in bekannter Weise parallele Längsmittelachsen 24 auf. Damit die Strahlenbündel 30 des Anregungslichts möglichst vollständig in die Analyten 12 in den Näpfchen 14 eintreten und Abschattungen ganz oder zumindest weitgehend vermieden werden, sind die Bohrungen 26 im Deckel 28 in Bezug zu den Näpfchen 14 der Mikrotiterplatte 16 so ausgerichtet, dass sich die Längsmittelachsen 74 der Bohrungen 26 und die Längsmittelachsen 24 der Näpfchen 14 jeweils innerhalb der Näpfchen 14 in einem Schnittpunkt S schneiden, bevorzugt etwa in Höhe des Flüssigkeitsspiegels 68 des Analyten 12 im Näpfchen 14. Dies sorgt für eine Zentrierung der einfallenden Strahlenbündel 30.

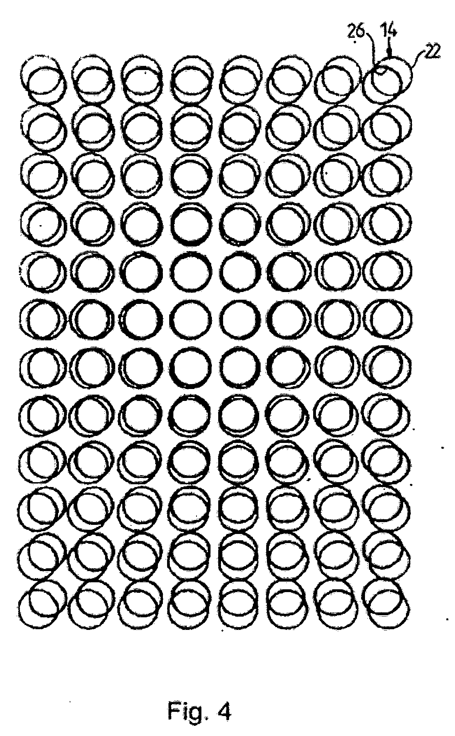

Außerdem entsprechend die Mittenabstände der Bohrungen 26 des Deckels 28 nicht genau den Mittenabständen der Näpfchen 14 der Mikrotiterplatte 16, sondern sind etwas kleiner, wie in der Überlagerung der Fig. 4 schematisch dargestellt, so dass die Bohrungen 26 ein etwas kleineres Rastermaß als die Näpfchen 14 aufweisen. Dies hat zur Folge, dass die Mitten der Mundöffnungen der Bohrungen 26 an der Ober- und Unterseite des Deckels 28 in Bezug zu den Längsmittelachsen 24 der zugehörigen Näpfchen 14 etwas zur Deckelmitte hin versetzt sind, wobei der Versatz in jeder Reihe und Spalte des Bohrungs- bzw. Näpfchen-Arrays von der Deckelmitte weg zu den äußersten Bohrungen bzw. Näpfchen zunimmt, wie aus Fig. 4 ersichtlich ist.

Während bei Verwendung einer 96er Mikrotiterplatte selbst unter ungünstigsten Bedingungen, d.h. in den Näpfchen 14 an den Ecken der Mikrotiterplatte 16, wo der Neigungswinkel des Strahlenbündels 30 des Anregungslichts in Bezug zur Längsmittelachse 24 der Näpfchen am größten ist, bei einem Analyt-Volumen von 50 µl oder 14 µl keine oder nur geringe Abschattungseffekte auftreten, kommt es bei 384er Mikrotiterplatten in den Näpfchen 14 an den Ecken der Mikrotiterplatte 16 bei einem Analyt-Volumen von 10 µl zu einer maximalen Abschattung von etwa 16 %, was in einem akzeptablen Rahmen liegt.

## Patentansprüche

1. Verfahren zur optischen Anregung einer Mehrzahl von Analyten (12) in einem Array von Reaktionsgefäßen (14) und zur Erfassung von Fluoreszenzlicht aus den Analyten (12), wobei den Analyten (12) in den Reaktionsgefäßen (12) Anregungslicht aus einer Anregungslichtquelle (38) zugeführt wird und wobei das Fluoreszenzlicht aus den Analyten (12) in den Reaktionsgefäßen (14) einem Fluoreszenzdetektor (34) zugeführt wird, wobei durch ein Array von Löchern (26) in einem oberhalb von dem Array von Reaktionsgefäßen (14) angeordneten Deckel (28) eine Mehrzahl von Strahlenbündeln (30) des Anregungslichts in die Reaktionsgefäße (14) unter dem Deckel (28) gelenkt wird und eine Mehrzahl von Strahlenbündeln (32) des Fluoreszenzlichts aus den Reaktionsgefäßen (14) gleichzeitig zum Fluoreszenzdetektor (34) gelangt, **dadurch gekennzeichnet, dass** die Mehrzahl von Strahlenbündeln (30) des Anregungslichts mit divergierenden Hauptstrahlen (76) von oben durch die Löcher (26) hindurchtritt und bis in die Reaktionsgefäße (14) hinein gelenkt wird und/oder dass die Mehrzahl von Strahlenbündeln (32) des Fluoreszenzlichts mit konvergierenden Hauptstrahlen (76) aus den Reaktionsgefäßen (14) von unten durch die Löcher (26) hindurchtritt und dann zum Fluoreszenzdetektor (34) gelangt.

2. Vorrichtung zur optischen Anregung einer Mehrzahl von Analyten (12) und zur Erfassung von Fluoreszenzlicht aus den Analyten (12), mit einem Array von Reaktionsgefäßen (14) zur Aufnahme der Analyten (12), einer Anregungslichtquelle (38) zur Bestrahlung der Analyten (12) in den Reaktionsgefäßen (14) mit Anregungslicht, einem Fluoreszenzdetektor (34) zur gleichzeitigen Erfassung von Fluoreszenzlicht aus den Analyten (12) in den Reaktionsgefäßen (14), sowie einem oberhalb von dem Array von Reaktionsgefäßen (14) angeordneten Deckel (28), der ein Array von Löchern (26) aufweist, durch die eine Mehrzahl von Strahlenbündeln (30) des Anregungslichts aus der Anregungslichtquelle (38) in die Reaktionsgefäße (14) eintreten und eine Mehrzahl von Strahlenbündeln (32) des Fluoreszenzlichts aus den Analyten (12) zum Fluoreszenzdetektor (34) gelangen kann, **dadurch gekennzeichnet, dass** die Hauptstrahlen (76) der Mehrzahl von Strahlenbündeln (30) des Anregungslichts innerhalb und unterhalb der Löcher (26) bis in die Reaktionsgefäße (14) hinein divergieren und/oder dass die Hauptstrahlen (78) der Mehrzahl von Strahlenbündeln (32) des Fluoreszenzlichts innerhalb und oberhalb der Löcher (26) zum Fluoreszenzdetektor (34) hin konvergieren.

3. Vorrichtung nach Anspruch 2, **gekennzeichnet durch** ein zwischen der Anregungslichtquelle (38) und dem Deckel (28) angeordnetes Anregungsoptiksystem (40) und ein zwischen dem Deckel (28) und dem Fluoreszenzdetektor (34) angeordnetes Detektionsoptiksystem (42), wobei das Detektionsoptiksystem (42) eine senkrecht zu einer Ebene des Deckels (28) und/oder des Arrays von Reaktionsgefäßen (14) ausgerichtete optische Achse (66) aufweist, und wobei das Anregungsoptiksystem (40) eine unter einem Winkel (α) zur optischen Achse des Detektionsoptiksystems (42) geneigte optische Achse (64) aufweist.

4. Vorrichtung nach Anspruch 3, **dadurch gekennzeichnet, dass** der Winkel (α) zwischen den optischen Achsen (64) des Anregungsoptiksystems (40) und des Detektionsoptiksystems (42) größer als die Summe der objektseitigen Aperturen des Anregungsoptiksystems (40) und des Detektionsoptiksystems (42) und kleiner als 5 Grad ist.

5. Vorrichtung nach einem der Ansprüche 2 bis 4, **dadurch gekennzeichnet, dass** die Löcher (26) im Deckel (28) zwischen einer Oberseite und einer Unterseite des Deckels (28) nach unten zu divergierende Längsmittelachsen (74) aufweisen.

6. Vorrichtung nach Anspruch 5, **dadurch gekennzeichnet, dass** die Längsmittelachse (74) jedes Lochs (26) so ausgerichtet ist, dass sie mit dem Hauptstrahl (76) des durch das Loch (26) hindurchtretenden Strahlenbündels (30) des Anregungslichts oder mit dem Hauptstrahl (78) des durch das Loch (26) hindurchtretenden Strahlenbündels (32) des Fluoreszenzlichts oder mit einer Winkelhalbierenden der Hauptstrahlen (76, 78) der durch das Loch (26) hindurchtretenden Strahlenbündel (30, 32) des Anregungs- und Fluoreszenzlichts fluchtet.

7. Vorrichtung nach Anspruch 5 oder 6, **dadurch gekennzeichnet, dass** ein Neigungswinkel der Längsmittelachsen (74) der Löcher (26) in Bezug zu einer Mittelsenkrechten des Deckels (28) und/oder des Arrays von Reaktionsgefäßen (14) von einer Deckelmitte weg nach außen zunimmt.

8. Vorrichtung nach einem der Ansprüche 5 bis 7, **dadurch gekennzeichnet, dass** sich die Längsmittelachsen (74) der Löcher (26) in einem gemeinsamen Schnittpunkt schneiden.

9. Vorrichtung nach einem der Ansprüche 5 bis 8, **dadurch gekennzeichnet, dass** die Reaktionsgefäße (14) parallele Längsmittelachsen (24) aufweisen, die sich jeweils innerhalb der Reaktionsgefäße (14) mit den Längsmittelachsen (74) der zugehörigen Löcher (26) schneiden.

10. Vorrichtung nach einem der Ansprüche 5 bis 9, **dadurch gekennzeichnet, dass** die Längsmittelachsen (24) benachbarter Löcher (26) geringfügig kleinere Abstände als die Längsmittelachsen (24) benachbarter Reaktionsgefäße (14) aufweisen.

11. Vorrichtung nach einem der Ansprüche 2 bis 10, **dadurch gekennzeichnet, dass** die Reaktionsgefäße (14) in dem Array von Reaktionsgefäßen (14) in geraden Zeilen und Spalten angeordnet sind, und dass eine senkrecht zu einer Ebene des Deckels (28) und/oder des Arrays von Reaktionsgefäßen (14) ausgerichtete optische Achse (66) des Detektionsoptiksystems (42) mit einer Schnittgeraden zweier zueinander senkrechter Symmetrieebenen (70, 72) fluchtet, zu denen die Reaktionsgefäße (14) in den Zeilen bzw. in den Spalten spiegelsymmetrisch sind.

12. Vorrichtung nach einem der Ansprüche 2 bis 11, **dadurch gekennzeichnet, dass** die Löcher (26) Bohrungen sind.

13. Vorrichtung nach einem der Ansprüche 2 bis 12, **dadurch gekennzeichnet, dass** der Deckel (28) beheizbar ist.

14. Vorrichtung nach einem der Ansprüche 2 bis 13, **dadurch gekennzeichnet, dass** zur Trennung des Anregungslichts von dem zu erfassenden Fluoreszenzlicht ein Strahlteiler oder ein polarisierender Strahlteiler vorgesehen ist.

15. Verwendung des Verfahrens nach Anspruch 1 und/oder der Vorrichtung nach einem der Ansprüche 2 bis 14 bei der quantitativen oder Echtzeit-PCR oder bei der Schmelzkurvenanalyse.
